# EUROPÄISCHE PATENTSCHRIFT

(11) **EP 1 658 018 B1**
(45) Veröffentlichungstag und Bekanntmachung des Hinweises auf die Patenterteilung: **02.05.2007**
(21) Anmeldenummer: 04762637.9
(22) Anmeldetag: 10.08.2004
(51) Int. Cl.: A61C 13/00

(54) **VERFAHREN ZUR BESCHICHTUNG DENTALER SUBSTRATE MITTELS ELEKTROPHORESE**
METHOD FOR THE ELECTROPHORETIC COATING OF DENTAL SUBSTRATES
PROCEDE POUR ENDUIRE DES SUBSTRATS DENTAIRES PAR ELECTROPHORESE

(30) Priorität: 28.08.2003 DE 10339603
(43) Veröffentlichungstag der Anmeldung: 24.05.2006
(73) Patentinhaber: Wolz, Stefan, 55566 Bad Sobernheim (DE)
(72) Erfinder: Wolz, Stefan, 55566 Bad Sobernheim (DE)
(74) Vertreter: Wolz, Werner
(86) Internationale Anmeldenummer: PCT/DE2004/001792
(87) Internationale Veröffentlichungsnummer: WO 2005/023139

(56) Entgegenhaltungen:
- DE-A- 10 021 437
- DE-A- 10 127 144

## Beschreibung

Aus der DE 27 05 770 A1 ist bereits ein Verfahren bekannt, bei dem auf ein Substrat ( Käppchen ) aus einer Metall-Legierung ein Opaker durch Elektrophorese aufgetragen wird. Die Opakermasse ist in Wasser suspendiert, so dass hier also ein wässriger Schlicker verwendet wird. Dieses Verfahren hat sich vermutlich wegen der mangelnden Festigkeit in der Praxis nicht durchgesetzt.

Als Substrat im Sinne der Erfindung ist jeder Artikel zu verstehen, auf den in der Dentaltechnik ein Keramikmaterial aufgebracht wird.

In der zwanzig Jahre älteren WO 99/50 480 A1 wurde die Idee der Elektrophorese wieder aufgegriffen. Hierbei kamen die Erfinder zur Überzeugung, dass wässrige Suspensionen für die Elektrophorese wegen der Bildung von Wasserstoffblasen nicht geeignet sind und lehren folglich das Arbeiten mit organischen Suspensionen, was neben anderen Nachteilen eine wesentlich höhere Spannung ( 50 bis 400 V ) erfordert. Gemäß dem einzigen Beispiel dieser Schrift wird zur Herstellung eines Käppchens ein Schlicker aus Alumina und Ethylalkohol erzeugt. Eine mit Silberlack beschichtete Duplierung eines Zahnstumpfes wird bei 100 V elektrophoretisch beschichtet und das hergestellte Käppchen anschließend gesintert. Nach dem Sintern erfolgt eine elektrophoretische Auftragung von Glaspulver, das nach einer fünfstündigen Trocknung in die Aluminamasse infiltriert wird.

Gemäß der DE 100 214 37 A1 wird zur Herstellung von vollkeramischen Gerüsten, insbesondere von Käppchen aus Alumina, der in der Zahntechnik übliche wässrige Schlicker verwendet. Hierbei wird der Stumpf eines Arbeitsmodells mit einem Trennmittel überzogen, auf das gemäß Ausführungsbeispiel ein Silberlack aufgetragen wird. Auf diesen Silberlack wird durch Anlegung einer Spannung der Feststoff des Schlickers elektophoretisch niedergeschlagen.

Dieses Verfahren hat gegenüber dem Verfahren der WO 99/50480 A1 den Vorteil, dass es ohne Dublierung arbeitet. Es ist also weniger zeitaufwendig, hat geringere Materialkosten, vermeidet mögliche Fehler durch Wegfall der Dublierung und benötigt weniger Zeit. Ferner ist Wasser als Suspensionsmittel nicht gesundheitsschädlich und explosiv und ermöglicht einen schnelleren Transport der Keramikteilchen. Im übrigen ist das Auftragen des Infiltrationsglases bei der WO 99/50480 mittels Elektrophorese sehr umständlich.

Beiden Lehren gemeinsam ist jedoch die nachteilige Verwendung von Silberlack, da die Erfahrung gezeigt hat, dass neben dem erhöhten Zeit- und Materialaufwand ungenaue Passungen resultieren. Ferner entstehen beim Ausbrennen gesundheitsschädliche Dämpfe und nicht-blokompatible Rückstände, die zeitaufwendig aus der Sinterkeramik entfernt werden müssen. Ferner neigt der Silberlack zu unkontrollierter Blasenbildung. Völlig ungeeignet ist die Verwendung von Silberlack, wenn das durch Elektrophorese aufgebrachte Keramikmaterial auf seinem Substrat verbleiben soll, wie es beim Auftrag von Dentin- oder Schneidmasse der Fall ist, da neben der mechanischen Schwächung nicht-akzeptierbare optische Eigenschaften resultierten.

Aus der DE 10127144 ist ein Verfahren zur Beschichtung dentaler substrate mittels Elektrophorese gemäß des Oberbegriffs des Anspruchs 1 bekannt.

Es ist daher Aufgabe der im Anspruch 1 angegebenen Erfindung, ein Verfahren bereitzustellen, das in kürzester Zeit die elektrophoretische Beschichtung von dentalen Substraten bei höchster Präzision ermöglicht.

Vorteilhafte Ausführungen sind in den abhängigen Ansprüchen beschrieben.

Das erfindungsgemäße Verfahren wird nachfolgend anhand zweier Zeichnungen erläutert. Es zeigen:
- Figur 1: die Herstellung eines Käppchens,
- Figur 2: die Beschichtung eines Implantatabutments.

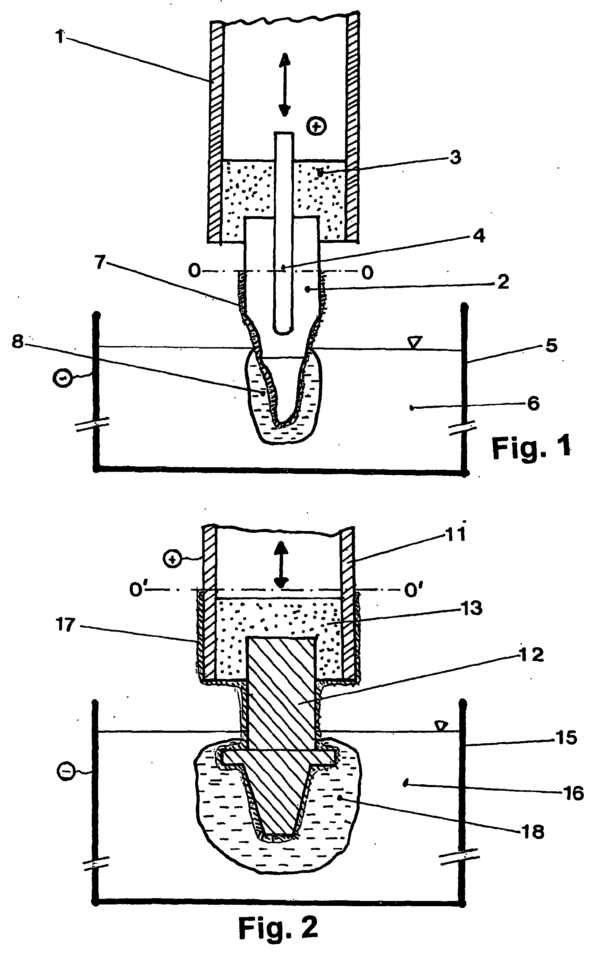

In Figur 1 ist ein vertikal beweglicher Halter 1 gezeigt, an dem der Stumpf 2 eines Arbeitsmodells mittels einer isolierenden Masse befestigt ist. Der Halter ist mit dem Pluspol ( nicht gezeigt ) einer Stromquelle verbunden und besteht aus elektrisch leitendem Material. Die isolierende Masse 3 wird durch eine Zunge 4 überbrückt, sodass der Stumpf 2 elektrischen Kontakt mit dem Pluspol haben kann. Auf den Stumpf 2 wird zunächst eine Trennschicht, wie sie z.B. aus der DE 198 12 664 A1 bekannt ist, aufgetragen, die in vorteilhafter Weise mit dem Feststoff des Schlickers 6 bestäubt werden kann, z.B. mit Alumina, wenn das herzustellende Käppchen aus Alumina bestehen soll.

Anschließend wird eine konzentrierte Kochsalzlösung auf den beschichteten Bereich, die handelsübliche Detergenzien enthalten kann.

In Figur 1 ist der beschichtete Bereich schraffiert dargestellt und reicht bis zur Ebene O-O. Anschließend wird der Stumpf 2 kurz in den mit Schlicker 6 gefüllten Behälter 5 bis zur Ebene O-O getaucht und in die gezeigt Position zurückgezogen. Im Schlicker 6 befindet sich dann nur noch der zu beschichtende Teil des Stumpfe 2. Der Stumpf 2 weist daher eine Gesamtschicht auf, die, von innen nach außen gesehen, aus einer Trennschicht, eventuell aus einer Kermikpulverschicht, einer hygroskopischen Salzschicht und einer Schlickerschicht besteht.

Nach dem Anlegen einer Spannung bis etwa 40 V ist der Stumpf 2 über die Zunge 4 mit dem Pluspol verbunden, während der Minuspol durch den Behälter 5 gebildet wird. Die leitende Salzschicht auf dem an sich nicht leitenden Stumpf 2 aus Gips bewirkt den Niederschlag 8 auf dem Stumpf. Dieser Niederschlag 8 wird dann in bekannter Weise getrocknet, durch eine CNC-Fräsmaschine bearbeitet, gesintert und glasinfiltriert und zu einem Käppchen fertig gestellt.

In Figur 2 wird die Beschichtung eines Implantatabutments 12 aus Titan gezeigt, die in ähnlicher Weise erfolgt wie die zuvor beschriebene Beschichtung eines Arbeitsstumpfes. Das Implantatabutment 12 ist mittels einer isolierenden Masse 13, beispielsweise einer üblichen Abformmasse aus Thermoplast, in einem Halter 11 befestigt. Das Implantatabutment ist in der Elektrophoresestellung gezeigt, nachdem es bis zur Ebene O'-O' in den Schlicker 16 im Behälter 15 eingetaucht wurde. Wie aus der Figur 2 ersichtlich überdeckt die Schicht 17 auch den unteren Bereich des Halters 11 bis zur Ebene O'-O'. Diese Schicht besteht wie beim ersten Beispiel gemäß Figur 1 aus einer Trennschicht, dem eventuell aufgestäubten Keramikpulver, und einer darüberliegenden hygroskopischen Salzschicht, die durch Schlicker abgedeckt ist. Beim Anlegen des Elektrophoresestromes bildet sich der Niederschlag 18, der in bekannter Weise weiterbearbeitet wird.

Aus obigen Ausführungen ist ersichtlich, dass es unerheblich ist, ob das Substrat leitend oder nicht-leitend ist, da der elektrische Widerstand nur durch die aufgetragene Schicht festgelegt ist. Bisher war es erforderlich, dass nicht-leitende Substrate mit einem Silberlack oder ähnlichem versehen wurden, was zu den vorstehend erwähnten Nachteilen führt. Leitende Substrate führen in der Regel zur unkontrollierbaren Gasentwicklung mit der Folge, dass ein unbrauchbares Produkt entsteht.

Wegen der vielseitigen Anwendung des erfindungsgemäßen Verfahrens ist die Lehre nicht auf die Herstellung von Käppchen ( z.B. aus Alumina ) oder das Beschichten von Implantatabutments mit Dentinmasse beschränkt, da jedes denkbare dentale Substrat mit dem erfindungsgemäßen Verfahren beschichtet werden kann. So können auch metallische Gerüste mit Dentinmasse beschichtet werden. Auch ist das Aufbringen von Schneidmasse auf Dentin möglich.

## Patentansprüche

1. Verfahren zur Beschichtung dentaler Substrate mittels Elektrophorese in einem wässrigen Schlicker, insbesondere zur Beschichtung eines Stumpfes (2) eines Arbeitsmodells oder eines Implantatabutments (12) mit Alumina oder Zirconia, wobei das Substrat (2;12) mit einem Trennmittel überzogen wird, auf das eine hygroskopische Salzschicht aufgetragen wird,
**dadurch gekennzeichnet, dass**
der so beschichtete Bereich in den Schlicker eingetaucht wird und anschließend so weit herausgezogen wird, dass beim nachfolgenden Anlegen der Spannung sich nur der mit Keramik zu beschichtende Teil des Substrates im Schlicker befinden, und
das Substrat (2;12) in einer isolierenden Masse (3;13) in einem vertikal beweglichen Halter (1;11) fixiert wird.

2. Verfahren nach Anspruch 1, **dadurch gekennzeichnet, dass** die Stromzufuhr zum Substrat über eine Zunge (4) erfolgt.

3. Verfahren nach Anspruch 1, **dadurch gekennzeichnet, dass** die Stromzufuhr zum Substrat über die aufgebrachte Schicht erfolgt, die in Kontakt mit dem Halter (11) steht.

4. Verfahren nach Anspruch 1 oder 2, **dadurch gekennzeichnet, dass** das Substrat ein Stumpf (2) aus Gips ist.

5. Verfahren nach einem der Ansprüche 1 bis 3, **dadurch gekennzeichnet, dass** das Substrat ein Implantatabutment aus Titan oder Keramik ist.

6. Verfahren nach einem der Ansprüche 1 bis 5, **dadurch gekennzeichnet, dass** die Salzschicht Natriumchlorid enthält.

7. Verfahren nach einem der Ansprüche 1 bis 6, **dadurch gekennzeichnet, dass** der Salzschicht oberflächenaktive Mittel zugesetzt sind.

8. Verfahren nach einem der Ansprüche 1 bis 7, **dadurch gekennzeichnet, dass** auf ein metallisches oder Keramisches Substrat Dentin- oder Schneidmasse aufgetragen wird.

9. Verfahren nach einem der Ansprüche 1 bis 8, **dadurch gekennzeichnet, dass** das Trennmittel mit dem Feststoff des Schlickers bestäubt wird.

## Claims

1. Method for coating of dental substrates by electrophoresis in an aqueous slip, especially for coating of a stump (2) of a working model or an implant abutment (12) with alumina or zirconia, whereas the substrate (2; 12) is coated with a separation agent onto which a hygroscopic salt layer is applied, **characterized in that** the region so coated is dipped into the slip and then pulled out far enough so that during subsequent application of the voltage only the part of the substrate to be coated with the ceramic is situated in the slip, and the substrate (2; 12) is fixed in a vertically moving holder (1; 11) in an insulating mass (3; 13).

2. Method according to claim 1, **characterized in that** the current supplied to the substrate occurs via a tongue (4).

3. Method according to claim 1, **characterized in that** the current supplied to the substrate occurs via the applied layer, which is in contact with holder (11).

4. Method according to claim 1 or 2, **characterized in that** the substrate is a stump (2) made of gypsum.

5. Method according to one of claims 1-3, **characterized in that** the substrate is an implant abutment made of titanium or ceramic.

6. Method according to one of claims 1-5, **characterized in that** the salt layer contains sodium chloride.

7. Method according to one of claims 1-6, **characterized in that** surfactants are added to the salt layer.

8. Method according to one of claims 1-7, **characterized in that** dentin or a cutting mass is applied to the metallic or ceramic substrate.

9. Method according to one of claims 1-8, **characterized in that** the separation agent is coated with the solid of the slip.

## Revendications

1. Procédé pour enduire des substrats dentaires par électrophorèse dans une barbotine aqueuse, en particulier pour enduire d'alumine ou d'oxyde de zirconium un corps (2) d'un modèle de travail ou d'un pilier d'implant (12), le substrat (2 ; 12) étant revêtu d'un agent de séparation sur lequel est appliquée une couche de sel hygroscopique,
**caractérisé en ce que** la zone ainsi revêtue est immergée dans la barbotine et ensuite retirée suffisamment pour que, lors de l'application ultérieure de la tension, seule la partie du substrat à enduire de céramique se trouve dans la barbotine, et **en ce que** le substrat (2 ; 12) est fixé en position dans une masse isolante (3 ; 13) contenue dans un support (1 ; 11) mobile en direction verticale.

2. Procédé selon la revendication 1, **caractérisé en ce que** l'alimentation en courant du substrat se fait par l'intermédiaire d'une lame (4).

3. Procédé selon la revendication 1, **caractérisé en ce que** l'alimentation en courant du substrat est réalisée par l'intermédiaire de la couche appliquée, laquelle est en contact avec le support (11).

4. Procédé selon la revendication 1 ou 2, **caractérisé en ce que** le substrat est un corps (2) en plâtre.

5. Procédé selon l'une des revendications 1 à 3, **caractérisé en ce que** le substrat est un pilier d'implant en titane ou en céramique.

6. Procédé selon l'une des revendications 1 à 5, **caractérisé en ce que** la couche de sel contient du chlorure de sodium.

7. Procédé selon l'une des revendications 1 à 6, **caractérisé en ce qu'**à la couche de sel sont ajoutés des agents tensioactifs.

8. Procédé selon l'une des revendications 1 à 7, **caractérisé en ce que**, sur un substrat métallique ou céramique, est appliquée une masse de dentine ou de coupe.

9. Procédé selon l'une des revendications 1 à 8, **caractérisé en ce qu'**on applique sur l'agent de séparation une pulvérisation de la matière solide de la barbotine.
